# EUROPEAN PATENT APPLICATION

(11) **EP 4 589 705 A2**
(43) Date of publication of application: **23.07.2025**
(21) Application number: 25150948.5
(22) Date of filing: 09.01.2025
(51) Int. Cl.: H01M 10/04, H01M 50/342

(54) **ELECTRODE ASSEMBLY AND RECHARGEABLE BATTERY WITH THE SAME**

(30) Priority: 15.01.2024 KR 20240006319
(71) Applicant: SAMSUNG SDI CO., LTD., Yongin-si, Gyeonggi-do 17084 (KR)
(72) Inventor: Kim, Yoseob, 17084 Yongin-si, Gyeonggi-do (KR); Lee, Juhyung, 17084 Yongin-si, Gyeonggi-do (KR); Ma, Hansol, 17084 Yongin-si, Gyeonggi-do (KR); Yoon, Byungjin, 17084 Yongin-si, Gyeonggi-do (KR)
(74) Representative: Gulde & Partner

(57) **Abstract**

An electrode assembly, includes: a main body including a first electrode and a second electrode stacked and wound with a separator therebetween, with a first substrate positioned at an outermost part of the main body; and a finishing tape attached to the main body to cover an end of the first substrate, wherein a circumferential length of the finishing tape is smaller than a circumference of the main body, and the first substrate is positioned in two layers over an entire exposed region of the main body which is not covered with the finishing tape.

## Description

### BACKGROUND

### 1. Field

Aspects of some embodiments of the present disclosure relate to a rechargeable battery.

### 2. Description of the Related Art

Electrode assemblies of cylindrical rechargeable batteries are becoming increasingly higher capacity and denser, and generally speaking, the higher the capacity of a rechargeable battery, the greater the change in volume of the electrode assembly during the charging and discharging process. The electrode assembly may include a finishing tape covering the ends of a negative electrode substrate. The finishing tape may cover a portion of the electrode assembly and allow a portion of a negative electrode substrate to contact a can to prevent voltage drop (IR drop).

A portion of the negative electrode substrate in the electrode assembly that is not covered with the finishing tape may change in volume during the charging and discharging process of the rechargeable battery. Shrinkage of the negative electrode substrate may occur, exposing a negative composite layer inside the negative electrode substrate. Exposure of the negative composite layer may cause the negative electrode substrate to fall off, which may lead to a short circuit in the rechargeable battery.

The above information disclosed in this Background section is only for enhancement of understanding of the background and therefore the information discussed in this Background section does not necessarily constitute prior art.

### SUMMARY

Aspects of some embodiments of the present disclosure relate to a rechargeable battery, and for example, to an electrode assembly of a cylindrical rechargeable battery.

Aspects of some embodiments of the present disclosure include an electrode assembly capable of preventing or reducing instances of a short circuit in a rechargeable battery by preventing the negative composite layer from being exposed even when the negative electrode substrate shrinks, and a rechargeable battery including the same.

According to some embodiments, the electrode assembly includes a main body and a finishing tape. According to some embodiments, the main body includes a first electrode and a second electrode stacked and wound with a separator therebetween, with a first substrate positioned at an outermost part of the main body. According to some embodiments, the finishing tape is attached to the main body to cover an end of the first substrate. According to some embodiments, the circumferential length of the finishing tape is smaller than the circumference of the main body. According to some embodiments, the first substrate is positioned in two layers over the entire exposed region of the main body which is not covered with the finishing tape.

According to some embodiments, the outermost part of the main body may include a first part where the first substrate is positioned in one layer, and a second part where the first substrate is positioned in two layers. According to some embodiments, the finishing tape may overlap the entire first part and a portion of the second part. According to some embodiments, the circumferential length of the finishing tape may be in a range of 0.2 to 0.8 times the circumference of the main body.

According to some embodiments, the outermost part of the main body may include a third part where the first substrate is positioned in two layers, and a fourth part where the first substrate is positioned in three layers. According to some embodiments, the finishing tape may overlap a portion of the third part and the entire fourth part. According to some embodiments, the circumferential length of the finishing tape may be 0.2 to 0.5 times the circumference of the main body.

According to some embodiments, the two layers of the first substrate may be in contact with each other in the exposed region of the main body, and a first composite layer may be positioned on an inner surface of the first substrate positioned on an inner side of the two layers of the first substrate.

According to some embodiments, an electrode assembly includes a main body and a finishing tape. According to some embodiments, the main body includes a first electrode and a second electrode stacked and wound with a separator therebetween, with a portion of the first electrode and an extension of the first electrode positioned at an outermost part of the main body. According to some embodiments, the finishing tape is attached to the main body to cover an end of the extension. According to some embodiments, the extension includes a first extension made of a first substrate and an inner composite layer, and a second extension made of the first substrate. According to some embodiments, the finishing tape covers the portion of the first electrode and the first extension and exposes the second extension at the outermost part of the main body.

According to some embodiments, the circumferential length of the second extension may be smaller than the circumference of the main body, and the first substrate may be positioned in two layers in the second extension. According to some embodiments, the two layers of the first substrate may be in contact with each other in the second extension, and an inner composite layer may be positioned on the first substrate positioned on an inner side of the two layers of the first substrate. According to some embodiments, a circumferential length of the finishing tape may be 0.2 to 0.8 times the circumference of the main body.

According to some embodiments, an electrode assembly includes a main body and a finishing tape. According to some embodiments, the main body includes a first electrode and a second electrode stacked and wound with a separator therebetween, with two or more layers of a first substrate positioned at an outermost part of the main body. According to some embodiments, the finishing tape is attached to the main body to cover an end of the first substrate. According to some embodiments, the circumferential length of the finishing tape is smaller than the circumference of the main body.

According to some embodiments, the outermost part of the main body may include a third part where the first substrate is positioned in two layers, and a fourth part where the first substrate is positioned in three layers. According to some embodiments, the finishing tape may cover the entire fourth part and a portion of the third part. According to some embodiments, the circumferential length of the finishing tape may be 0.2 to 0.5 times the circumference of the main body.

According to some embodiments, a rechargeable battery includes an electrode assembly, a can accommodating the electrode assembly therein, and a cap assembly coupled to an end of the can to seal the can. The electrode assembly includes a main body and a finishing tape. According to some embodiments, the main body includes a first electrode and a second electrode stacked and wound with a separator therebetween, with a first substrate positioned at an outermost part of the main body. According to some embodiments, the finishing tape is attached to the main body to cover an end of the first substrate. According to some embodiments, the circumferential length of the finishing tape is smaller than the circumference of the main body. According to some embodiments, an exposed region of the main body that is not covered with the finishing tape is in contact with the can, and the first substrate is positioned in two layers throughout the exposed region.

According to some embodiments, even if the first substrate shrinks during the charging and discharging process of the rechargeable battery, only the first substrate positioned inside may be exposed, and the first composite layer may not be exposed. Therefore, it may be possible to prevent or reduce instances of the first composite layer being exposed during the charging and discharging process of the rechargeable battery. As a result, the safety and driving stability of the rechargeable battery may be relatively improved.

### BRIEF DESCRIPTION OF THE DRAWINGS

FIG. 1 is a perspective view of an electrode assembly according to some embodiments.
FIG. 2 is an enlarged view of the region A shown in FIG. 1.
FIG. 3 is a cross-sectional view of the electrode assembly shown in FIG. 1.
FIG. 4 is a cross-sectional view of the electrode assembly according to some embodiments.
FIG. 5 is a perspective view of a rechargeable battery according to some embodiments.
FIG. 6 is a cross-sectional view of the rechargeable battery shown in FIG. 5.
FIG. 7 is a partial enlarged view of FIG. 6.

### DETAILED DESCRIPTION

Hereinafter, aspects of some embodiments of the present disclosure will be described more fully with reference to the accompanying drawings, in which aspects of some embodiments according to the present disclosure are shown. As those skilled in the art would realize, the described embodiments may be modified in various different ways, all without departing from the spirit or scope of embodiments according to the present invention.

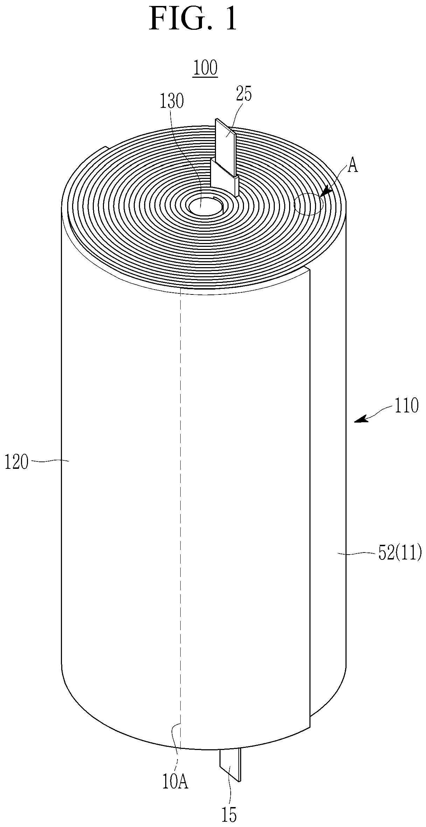

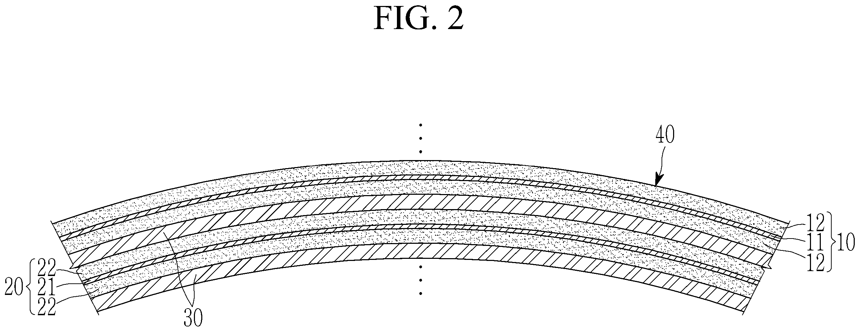

FIG. 1 is a perspective view of an electrode assembly according to some embodiments, and FIG. 2 is an enlarged view of the region A shown in FIG. 1.

Referring to FIGS. 1 and 2, according to some embodiments, an electrode assembly 100 may be a wound electrode assembly for a cylindrical rechargeable battery. The electrode assembly 100 may include a main body 110 including a first electrode 10 and a second electrode 20 wound in a round shape with a separator 30 therebetween, and a finishing tape 120 attached to the outermost part of the main body 110.

The main body 110 may include the first electrode 10, the second electrode 20, and the separator 30. The separator 30 may be positioned between the first electrode 10 and the second electrode 20 to insulate them. Each of the first electrode 10, the second electrode 20, and the separator 30 may be configured in the shape of a long strip and may be wound in the form of a jelly roll.

For example, the separator 30, the second electrode 20, the separator 30, and the first electrode 10 may be sequentially stacked to form a laminate 40, and the laminate 40 may be wound around a center pin 130. At this time, the second electrode 20 may be positioned closer to the center pin 130 than the first electrode 10.

The first electrode 10 may include a first substrate 11 and a first composite layer 12 positioned on the first substrate 11. The first electrode 10 may include a first lead tab 15 extending from the first substrate 11 to one side (the lower side). The second electrode 20 may include a second substrate 21 and a second composite layer 22 positioned on the second substrate 21. The second electrode 20 may include a second lead tab 25 extending from the second substrate 21 to one side (the upper side).

In a lithium-ion battery, the first substrate 11 may include, for a non-limiting example, copper foil or nickel foil, and the first composite layer 12 may include, for a non-limiting example, graphite, a conductive material, a binder, or the like. The second substrate 21 may be composed of aluminum foil, and the second composite layer 22 may include transition metal oxides such as LiCoO₂, LiNiOz, LiMn₂O₄, Li(NiCoAl)O₂, LiFePOt, and Li(NiCoMn)O₂, a conductive material, and a binder, or the like. The first electrode 10 may be referred to as a negative electrode, and the second electrode 20 may be referred to as a positive electrode.

The separator 30 may include a polymer material such as polyethylene or polypropylene, and it insulates the first electrode 10 and the second electrode 20 while allowing movement of lithium ions. The electrode assembly 100 is accommodated inside a can together with the electrolyte solution.

The volume of the first electrode 10 changes during charging and discharging of the rechargeable battery. For example, the active material (graphite) of the first composite layer 12 reversibly absorbs and releases lithium ions from the active material (lithium oxide) of the second composite layer 22 and allows current to flow through an external circuit. During the charging and discharging of a rechargeable battery, the volume of the first composite layer 12 changes as lithium ions enter and exit, and the first substrate 11 supporting the first composite layer 12 repeatedly contracts and expands.

In the main body 110, the length of the first electrode 10 and the length of the second electrode 20 according to the wound direction may be different from each other, and the length of the first composite layer 12 positioned on the inner surface of the first substrate 11 and the length of the first composite layer 12 positioned on the outer surface of the first substrate 11 may be different from each other. At this time, the inner surface of the first substrate 11 is a surface facing the center pin 130, and the outer surface of the first substrate 11 is a surface positioned toward the outside of the main body 110. Hereinafter, "length" refers to the circumferential length measured along the wound direction from the center pin 130.

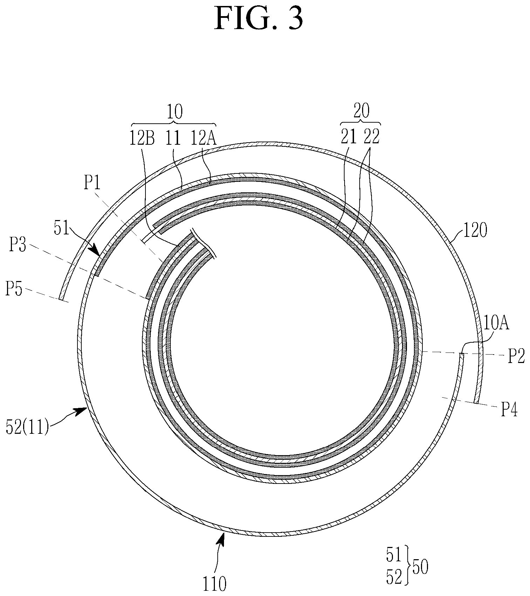

FIG. 3 is a cross-sectional view of the electrode assembly shown in FIG. 1. In FIG. 3, the separator is omitted for convenience, and for easier understanding, it is assumed that the first electrode 10, the second electrode 20, and the finishing tape 120 are positioned at a distance from each other.

Referring to FIGS. 1 to 3, in the main body 110, the second electrode 20 may be positioned closer to the center pin 130 than the first electrode 10. That is, the first electrode 10 may be wound together with the second electrode 20 on the outside of the second electrode 20. The length of the first electrode 10 may be greater than the length of the second electrode 20, and the first electrode 10 may include an extension 50 that does not overlap the second electrode 20 and is positioned alone. The length of the extension 50 may be smaller than the circumference of the main body 110.

In FIG. 3, P1 represents the end position of the second electrode 20, and P2 represents the end position of the first electrode 10. The extension 50 of the first electrode 10 represents a portion of the first electrode 10 from P1 to P2. The extension 50 does not overlap the second electrode 20, but overlaps a portion of the first electrode 10 positioned inside the extension 50.

The end of the second electrode 20 may be an end of the second substrate 21, and the second composite layer 22 positioned on both surfaces of the second substrate 21 may be positioned at a distance (e.g., a set or predetermined distance) from the end of the second substrate 21. An end 10A of the first electrode 10 may be an end portion of the first substrate 11, and the first composite layer 12 positioned on both surfaces of the first substrate 11 may be positioned at a distance (e.g., a set or predetermined distance) from the end 10A of the first substrate 11.

For convenience, the first composite layer 12 positioned on the inner surface of the first substrate 11 is referred to as "inner composite layer 12A," and the first composite layer 12 positioned on the outer surface of the first substrate 11 is referred to as "outer composite layer 12B."

The length of the inner composite layer 12A may be greater than the length of the outer composite layer 12B. In FIG. 3, P3 represents the end position of the outer composite layer 12B.

The end of the outer composite layer 12B may be positioned slightly further outward along the wound direction than the end (P1 position) of the second substrate 21, and the inner composite layer 12A may be provided one revolution longer than the outer composite layer 12B. That is, the inner composite layer 12A may be positioned by extending one revolution further from the end of the outer composite layer 12B. The end position of the inner composite layer 12A may be the same as P3.

The inner composite layer 12A may be positioned in a portion of the extension 50, and the remainder of the extension 50 may be composed of the first substrate 11. Among the extensions 50 from P1 to P2, the inner composite layer 12A may be positioned in some of a section from P1 to P3, and most of a section from P3 to P2 among the extensions 50 may be composed of the first substrate 11. The length (length from P1 to P3) of the inner composite layer 12A positioned in the extension 50 may be 0.1 times (or approximately 0.1 times) or less of the total length of the extension 50.

The extension 50 may be divided into a first extension 51 where the inner composite layer 12A is positioned, and a second extension 52 composed of the first substrate 11 without the inner composite layer 12A. In other words, the extension 50 may comprise the first extension 51 made of the first substrate 11 and the inner composite layer 12A, and the second extension 52 made of the first substrate 11. The first extension 51 is a section from P1 to P3, and the second extension 52 is a section from P3 to P2. The first substrate 11 configuring the second extension 52 may overlap the first substrate 11 positioned therein.

The outermost part of the main body 110 may be composed of a first part in which the first substrate 11 is positioned in one layer, and a second part in which the first substrate 11 is positioned in two layers. The second part may correspond to the second extension 52, and the first part may correspond to the remaining parts excluding the second extension 52. In the second part, the first substrate 11 may be positioned in two layers. The two layers of the first substrate 11 may be in direct contact without any layer of material therebetween. The inner composite layer 12A may be on an inner surface of the first substrate 11 positioned on an inner side of the two layers of the first substrate 11.

The finishing tape 120 may cover the end 10A of the first substrate 11 and be attached to the outermost part of the main body 110. At this time, the end 10A of the first substrate 11 has the same meaning as the end of the first electrode 10, the end of the extension 50, and the end of the second extension 52.

The finishing tape 120 may be made of a polymer film with an adhesive function, and it fixes the end 10A of the first substrate 11 so that the end 10A of the first substrate 11 does not move. The finishing tape 120 may be made of a polyimide (PI) film or a polyethylene terephthalate (PET) film, but is not limited to this example.

The height of the finishing tape 120 along the axial direction of the main body 110 (vertical direction in FIG. 1) may be equal to or smaller than the height of the main body 110. The finishing tape 120 may be provided as one piece, or may be provided in plural pieces spaced apart from each other along the axial direction of the main body 110. In FIG. 1, the case where one finishing tape 120 is provided is shown as an example.

Referring to FIG. 3, the finishing tape 120 may be attached to the end 10A of the first substrate 11 while minimizing the portion overlapping the extension 50. That is, the finishing tape 120 may be positioned opposite the extension 50 so that most of the extension 50 is exposed. The circumferential length of the finishing tape 120 may be smaller than the circumference of the main body 110, and the exposed region of the main body 110 that is not covered with the finishing tape 120 may correspond to the second extension 52.

The finishing tape 120 may overlap both ends of the second extension 52 and be positioned opposite the second extension 52. That is, the finishing tape 120 may overlap the entire first part where the first substrate 11 is positioned in one layer and a portion of the second part where the first substrate 11 is positioned in two layers.

In FIG. 3, P4 and P5 represent the positions of both ends of the finishing tape 120. The finishing tape 120 may overlap one end of the second extension 52 and a portion of the second extension 52 in the section from P4 to P2, and may overlap the first substrate 11 where the inner composite layer 12A is positioned in the section from P2 to P3. Additionally, the finishing tape 120 may overlap the opposite end of the second extension 52 and a portion of the second extension 52 in the section from P3 to P5. A portion of the first electrode 10 and the extension 50 of the first electrode 10 may be positioned at the outermost part. The finishing tape 120 may cover the portion of the first electrode 10 and the first extension 51 and exposed the second extension 52 at the outermost part of the main body 110.

The finishing tape 120 may expose a portion of the first substrate 11 and allow the exposed first substrate 11 to contact the can to prevent a voltage drop (IR drop). The can is in contact with the first substrate 11 and is charged to the same polarity as the first electrode 10, and it may function as an external terminal (negative terminal) of the first electrode 10. The exposed region of the main body 110 that is not covered with the finishing tape 120 at the outermost part of the main body 110 may be the second extension 52, and the first substrate 11 may be positioned in two layers in the exposed region of the main body 110.

A volume change occurs in the main body 110 during the charging and discharging process of the rechargeable battery. The volume change is suppressed by the finishing tape 120 in the region covered by the finishing tape 120, but the volume change occurs in the exposed region not covered by the finishing tape 120. According to some embodiments, because the first substrate 11 is positioned in two layers in the exposed region of the main body 110, even if the outer first substrate 11 shrinks, only the first substrate 11 positioned therein is exposed, and the first composite layer 12 is not exposed.

The circumferential length of the finishing tape 120 capable of attaching during the manufacturing process of the electrode assembly 100 may be 0.2 times (or approximately 0.2 times) the circumference of the main body 110. Additionally, if the circumferential length of the finishing tape 120 exceeds 0.8 times (or approximately 0.8 times) the circumference of the main body 110, the contact area between the first substrate 11 and the can becomes small, which may cause a voltage drop. Accordingly, the circumferential length of the finishing tape 120 measured at the outermost part of the main body 110 may be 0.2 to 0.8 times (or approximately 0.2 to 0.8 times) the circumference of the main body 110.

The second extension 52 may have a length slightly greater than the circumference of the main body 110 minus the circumferential length of the finishing tape 120 so as to occupy the exposed region of the main body 110. That is, the length of the second extension 52 may correspond to the length of both ends overlapping the finishing tape 120 plus the length of the exposed region of the main body 110 in contact with the inner wall of the can.

In this way, the electrode assembly 100 according to some embodiments may prevent voltage drop by contacting the exposed region of the main body 110 with the can, while preventing the phenomenon of exposing the first composite layer 12 even if the first substrate 11 shrinks during the charging and discharging process. Therefore, the electrode assembly 100 according to some embodiments may relatively improve the safety and driving stability of the rechargeable battery.

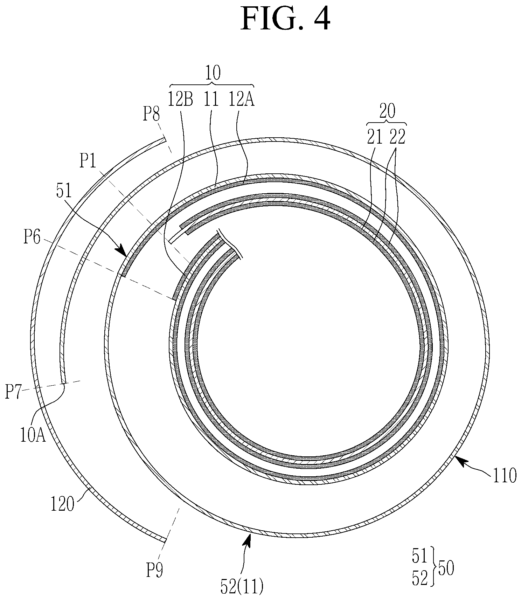

FIG. 4 is a cross-sectional view of the electrode assembly according to some embodiments. The electrode assembly of the embodiments illustrated and described with respect to FIG. 4 has the same or a similar configuration as the embodiments described above, except for the configuration of the extension and the finishing tape described below.

Referring to FIG. 4, according to some embodiments, the length of the second extension 52 may be larger than the circumference of the main body 110. That is, the second extension 52 may be provided with a length of one revolution or more, and the second extension 52 itself may include a double-overlapping portion. In FIG. 4, P6 represents the starting position of the second extension 52, and P7 represents the end position of the second extension 52. The second extension 52 may extend longer than one revolution from P6, and in the section from P6 to P7, the second extension 52 may be positioned in two layers.

As the second extension 52 is provided with a length of more than one revolution, the first substrate 11 may be positioned in two or more layers at the outermost part of the main body 110, regardless of its position. For example, in the section from P6 to P7, the first substrate 11 may be positioned in three layers, and in the remaining sections, the first substrate 11 may be positioned in two layers.

The finishing tape 120 may be attached to the main body 110 to cover the end 10A of the second extension 52, and it may cover the portion where the second extension 52 overlaps in two layers (the portion from P6 to P7). In FIG. 4, P8 and P9 represent the positions of both ends of the finishing tape 120. The finishing tape 120 may overlap the two layers of the first substrate 11 in the section from P8 to P6 and the section from P7 to P9, and it may overlap the three layers of the first substrate 11 in the section from P6 to P7.

That is, the outermost part of the main body 110 may be composed of a third part in which the first substrate 11 is positioned in two layers, and a fourth part in which the first substrate 11 is positioned in three layers. The finishing tape 120 may overlap a portion of the third part and the entire fourth part.

The circumferential length of the finishing tape 120 may be 0.2 to 0.5 times the circumference of the main body 110. As the first substrate 11 is positioned in two or more layers throughout the outermost part of the main body 110, the circumferential length of the finishing tape 120 may be less than half the circumference of the main body 110. In this case, the area of the first substrate 11 in contact with the inner wall of the can increases, thereby increasing the effect of suppressing voltage drop.

Even if the first substrate 11 in the exposed region shrinks during the charging and discharging process of the rechargeable battery, only the first substrate 11 positioned therein is exposed, and the first composite layer 12 is not exposed. The electrode assembly according to some embodiments may also relatively improve the safety and driving stability of the rechargeable battery by preventing the first composite layer 12 from being exposed during the charging and discharging process of the rechargeable battery.

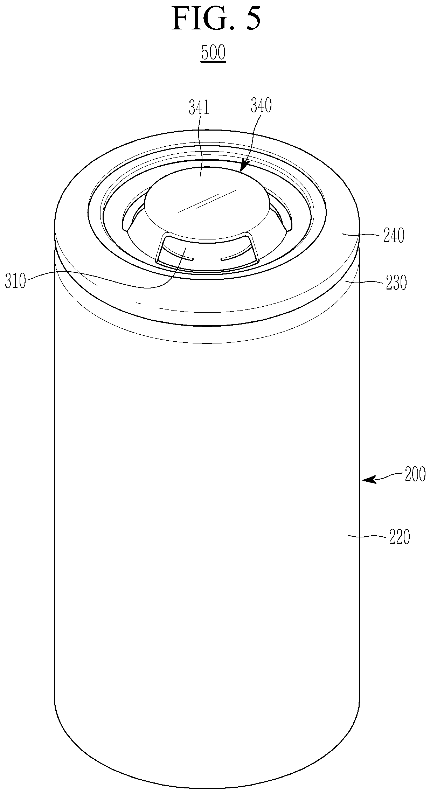

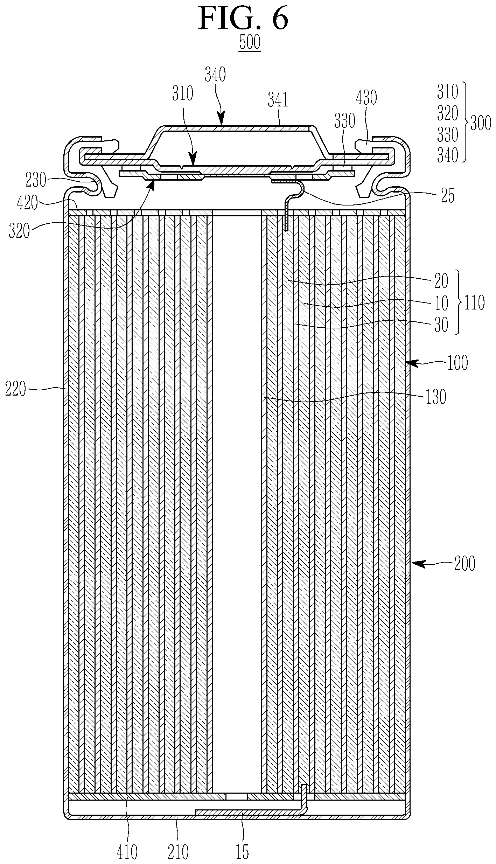

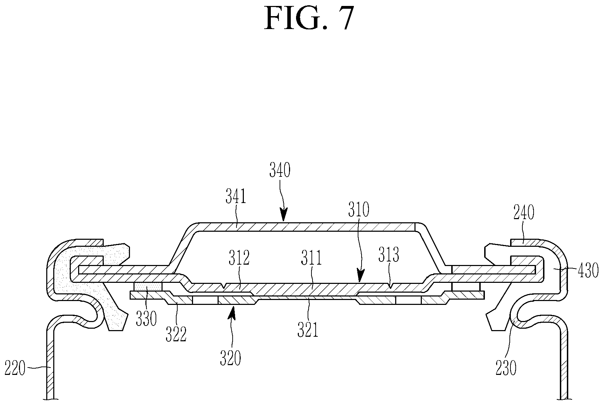

FIG. 5 is a perspective view of a rechargeable battery according to some embodiments, FIG. 6 is a cross-sectional view of the rechargeable battery shown in FIG. 5, and FIG. 7 is a partial enlarged view of FIG. 6.

Referring to FIGS. 5 to 7, a rechargeable battery 500 according to some embodiments may include a can 200, the electrode assembly 100 accommodated inside the can 200, and a cap assembly 300 coupled to the end of the can 200 to seal the can 200. The electrode assembly 100 may be an electrode assembly according to one of the above-described embodiments, and include a main body and a finishing tape.

The can 200 may include a circular bottom portion 210 and a cylindrical side portion 220 connected to an edge of the bottom portion 210. When the rechargeable battery 500 is turned upside down, the bottom portion 210 may be referred to as a top portion. During the manufacturing process of the rechargeable battery 500, the end (upper end) of the side portion 220 is open, and the electrode assembly 100 may be accommodated inside the can 200 together with the electrolyte solution. The can 200 may be made of steel, steel alloy, aluminum, and aluminum alloy.

A beading portion 230 and a crimping portion 240 may be positioned on the side portion 220 of the can 200. The beading portion 230 is a part of the side portion 220 in which a part of the side portion 220 is deformed to be concave toward the inside of the can 200. The crimping portion 240 is a part of the side portion 220 in which the edge of the side portion 220 is bent inwardly. The movement of the electrode assembly 100 may be suppressed by the beading portion 230, and the cap assembly 300 may be fixed to the can 200 by the beading portion 230 and the crimping portion 240.

In the electrode assembly 100, the first lead tab 15 and the second lead tab 25 may be positioned on opposite sides of each other. The first lead tab 15 may be positioned on one side (lower side) of the electrode assembly 100 facing the bottom portion 210 and may be fixed to the bottom portion 210. The second lead tab 25 may be positioned on one side (upper side) of the electrode assembly 100 facing the cap assembly 300 and may be fixed to the cap assembly 300.

A first insulating plate 410 may be positioned between the electrode assembly 100 and the bottom portion 210 of the can 200. A second insulating plate 420 may be positioned between the electrode assembly 100 and the cap assembly 300. The first insulating plate 410 may prevent the second electrode 20 of the electrode assembly 100 from contacting the can 200. The second insulating plate 420 may prevent the first electrode 10 of the electrode assembly 100 from contacting the cap assembly 300.

The cap assembly 300 may include a safety vent 310, a cap down 320 positioned on one side (lower side) of the safety vent 310 facing the electrode assembly 100, a ring-shaped insulating part 330 positioned between the safety vent 310 and the cap down 320, and a cap up 340 positioned on one side (upper side) of the safety vent 310 opposite to the cap down 320. The configuration of the cap assembly 300 is not limited to the example shown and may be modified in various ways.

The safety vent 310 may include a central part 311 and a peripheral part 312 surrounding the central part 311. The thickness of the central part 311 may be greater than the thickness of the peripheral part 312, and a notch groove 313 may be positioned in the peripheral part 312. The cap down 320 may include a central part 321 and a peripheral part 322 surrounding the central part 321, and the thickness of the central part 321 may be smaller than the thickness of the peripheral part 322. At least one hole may be positioned in each of the central part 321 and the peripheral part 322.

The central part 311 of the safety vent 310 and the central part 321 of the cap down 320 may be integrally joined by a method such as welding. The safety vent 310 and the cap down 320 may be positioned at a distance from each other in the remaining portions except for the central parts 311 and 321. The insulating part 330 may surround the central parts 311 and 321, and it may be positioned between the safety vent 310 and the cap down 320. The cap up 340 may include a terminal part 341, and at least one hole for discharging gas may be positioned in the cap up 340.

The cap assembly 300 may be coupled to the side portion 220 of the can 200 via an insulating gasket 430. The insulating gasket 430 surrounds the edges of the safety vent 310 and the cap up 340, and it may be pressed between the beading portion 230 and the crimping portion 240 of the can 200. The second lead tab 25 of the electrode assembly 100 may be fixed to one surface (lower surface) of the cap down 320. The cap down 320, the safety vent 310, and the cap up 340 may be charged with the same polarity as the second electrode 20. The terminal part 341 of the cap up 340 may function as a terminal (positive terminal) that allows current to flow to an external device.

The can 200 to which the first lead tab 15 is fixed may be charged with the same polarity as the first electrode 10, and the bottom portion 210 of the can 200 may function as a terminal (negative terminal) that allows current to flow to an external device. Referring to FIGS. 1 and 6, the exposed region of the main body 110 that is not covered with the finishing tape 120 is in contact with the side portion 220 to expand the contact area between the can 200 and the first electrode 10.

During the charging and discharging process of the rechargeable battery 500, repetitive volume changes occur in the electrode assembly 100, and contraction and expansion of the first substrate 11 may occur in exposed regions of the main body 110 that are not covered with the finishing tape 120. In the rechargeable battery 500 according to some embodiments, by having the first substrate 11 positioned in two layers throughout the exposed region of the main body 110, even if the outermost first substrate 11 contracts, it is possible to prevent the first composite layer 12 from being exposed, thereby advantageously improving safety and driving stability.

Meanwhile, during use of the rechargeable battery 500, gas may be generated for various reasons, and the internal pressure of the rechargeable battery 500 may increase due to the gas. When gas is generated, pressure is continuously applied to the safety vent 310 through the hole in the cap down 320, and at a certain pressure, the safety vent 310 may deform toward the outside (upper side) of the cap assembly 300, causing the safety vent 310 and the cap down 320 to separate from each other.

At this time, the central part 321 of the cap down 320 may break away from the peripheral part 322 and rise together with the central part 311 while attached to the central part 311 of the safety vent 310. Current flow is blocked by separation of the safety vent 310 and the cap down 320. Afterwards, when the pressure continues to rise, the safety vent 310 fractures around the notch groove 313, and the internal gas is discharged through the hole in the cap up 340. Through this process, ignition and explosion of the rechargeable battery 500 may be prevented.

While aspects of some embodiments of the present disclosure have been described in connection with what is presently considered to be practical embodiments, it is to be understood that the disclosure is not limited to the disclosed embodiments, but, on the contrary, is intended to cover various modifications and equivalent arrangements included within the spirit and scope of the claims, and their equivalents.

## Claims

1. An electrode assembly (100), comprising:
a main body (110) including a first electrode (10) and a second electrode (20) stacked and wound with a separator (30) therebetween, with a first substrate (11) positioned at an outermost part of the main body (110); and
a finishing tape (120) attached to the main body (110) to cover an end (10A) of the first substrate (11),
wherein a circumferential length of the finishing tape (120) is smaller than a circumference of the main body (110),
and the first substrate (11) is positioned in two layers over an entire exposed region of the main body (110) which is not covered with the finishing tape (120).

2. The electrode assembly (100) as claimed in claim 1, wherein
the outermost part of the main body (110) comprises a first part where the first substrate (11) is positioned in one layer, and a second part where the first substrate (11) is positioned in two layers,
and the finishing tape (120) overlaps the entire first part and a portion of the second part.

3. The electrode assembly (100) as claimed in claim 2, wherein
the circumferential length of the finishing tape (120) is in a range of 0.2 to 0.8 times the circumference of the main body (110).

4. The electrode assembly (100) as claimed in claims 1 to 3, wherein
the outermost part of the main body (110) comprises a third part where the first substrate (11) is positioned in two layers, and a fourth part where the first substrate (11) is positioned in three layers,
and the finishing tape (120) overlaps a portion of the third part and the entire fourth part.

5. The electrode assembly (100) as claimed in claim 4, wherein
the circumferential length of the finishing tape (120) is in a range of 0.2 to 0.5 times the circumference of the main body (110).

6. The electrode assembly (100) as claimed in claims 1 to 5, wherein
the two layers of the first substrate (11) contact each other in the exposed region of the main body (110), and a first composite layer (12) is on an inner surface of the first substrate (11) positioned on an inner side of the two layers of the first substrate (11).

7. An electrode assembly (100), comprising:
a main body (110) including a first electrode (10) and a second electrode (20) stacked and wound with a separator (30) therebetween, with a portion of the first electrode (10) and an extension (50) of the first electrode (10) positioned at an outermost part of the main body; and
a finishing tape (120) attached to the main body (110) to cover an end (10A) of the extension (50),
wherein the extension (50) comprises a first extension (51) made of a first substrate (11) and an inner composite layer (12A), and a second extension (52) made of the first substrate (11), and
the finishing tape (120) covers the portion of the first electrode (10) and the first extension (51) and exposes the second extension (52) at the outermost part of the main body (110).

8. The electrode assembly (100) as claimed in claim 7, wherein a circumferential length of the second extension (52) is smaller than a circumference of the main body (110),
and the first substrate (11) is positioned in two layers in the second extension (52).

9. The electrode assembly (100) as claimed in claim 8, wherein
the two layers of the first substrate (11) contact each other in the second extension (52),
an inner composite layer (12A) is on the first substrate (11) positioned on an inner side of the two layers of the first substrate (11).

10. The electrode assembly (100) as claimed in claim 8, wherein
the circumferential length of the finishing tape (120) is in a range of 0.2 to 0.8 times the circumference of the main body (110).

11. An electrode assembly (100), comprising:
a main body (110) including a first electrode (10) and a second electrode (20) stacked and wound with a separator (30) therebetween, with two or more layers of a first substrate (11) positioned at an outermost part of the main body (110); and
a finishing tape (120) attached to the main body (110) to cover an end (10A) of the first substrate (11),
wherein a circumferential length of the finishing tape (120) is smaller than a circumference of the main body (110).

12. The electrode assembly (100) as claimed in claim 11, wherein
the outermost part of the main body (110) comprises a third part where the first substrate (11) is positioned in two layers, and a fourth part where the first substrate (11) is positioned in three layers,
and the finishing tape (120) covers the entire fourth part and a portion of the third part.

13. The electrode assembly (100) as claimed in claim 12, wherein
the circumferential length of the finishing tape (120) is in a range of 0.2 to 0.5 times the circumference of the main body (110).

14. A rechargeable battery (500), comprising:
an electrode assembly (100);
a can (200) accommodating the electrode assembly (100) therein; and
a cap assembly (300) coupled to an end of the can (200) to seal the can (200),
wherein the electrode assembly (100) comprises:
a main body (110) including a first electrode (10) and a second electrode (20) stacked and wound with a separator (30) therebetween, with a first substrate (11) positioned at an outermost part; and
a finishing tape (120) attached to the main body (110) to cover an end (10A) of the first substrate (11),
wherein a circumferential length of the finishing tape (120) is smaller than a circumference of the main body (110),
an exposed region of the main body (110) that is not covered with the finishing tape (120) contacts the can (200), and the first substrate (11) is positioned in two layers throughout the exposed region.

15. A rechargeable battery (500) according to claim 14, comprising a safety vent (310) that is able to fracture around a notch groove (313) in order to discharge internal gas through a hole in a cap up (340).
